(19) **Europäisches Patentamt / European Patent Office / Office européen des brevets**

(11) **EP 4 682 314 A1**

(12) **EUROPEAN PATENT APPLICATION**
published in accordance with Art. 153(4) EPC

(43) Date of publication:
**21.01.2026 Bulletin 2026/04**

(21) Application number: **24774413.9**

(22) Date of filing: **22.01.2024**

(51) International Patent Classification (IPC):
**E02F 3/43** (2006.01)　　　**E02F 9/20** (2006.01)

(52) Cooperative Patent Classification (CPC):
**E02F 3/43; E02F 9/20**

(86) International application number:
**PCT/JP2024/001554**

(87) International publication number:
**WO 2024/195267 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023 JP 2023043495**

(71) Applicant: **Hitachi Construction Machinery Co., Ltd.**
**Tokyo 110-0015 (JP)**

(72) Inventors:
• **SHIWAKU, Koji**
**Tsuchiura-shi, Ibaraki 300-0013 (JP)**
• **MORIKI, Hidekazu**
**Tsuchiura-shi, Ibaraki 300-0013 (JP)**
• **INADA, Ryou**
**Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **CONTROL SYSTEM FOR WORK MACHINE**

(57)　Provided is a control system for a work machine capable of continuously executing excavation operation, without making the excavation incomplete or making the work suspended in automatic excavation control of the work machine. A re-planning necessity determination section 207 determines necessity of re-planning of an excavation trajectory during the operation of the vehicle body, and a re-planning section 204 re-plans the excavation trajectory during the operation of the vehicle body when the re-planning necessity determination section 207 determines that re-planning is required.

Fig. 2

## Description

Technical Field

The present invention relates to a control system for a work machine that performs automatic excavation control.

Background Art

In work machines such as a hydraulic excavator, there is proposed a work machine that plans operation in advance and automatically performs work along the planned operation.
For example, Patent Literature 1 proposes a control system that performs control to generate a target trajectory of a work equipment according to an excavation curve ratio determined in advance and output an operation signal for the work equipment according to the target trajectory.

Citation List

Patent Literature

Patent Literature 1: JP 7088792 B2

Summary of Invention

Technical Problem

According to Patent Literature 1, it is possible to generate an excavation trajectory of the work equipment and perform control (automatic excavation control) along the excavation trajectory.
However, in excavation work performed by the work machine such as a hydraulic excavator, the excavation load varies depending on the properties or soil condition of the earth and sand to be excavated, and thus the excavation along a predetermined excavation trajectory cannot often be achieved. As a result, the excavation may be incomplete, failing to follow the excavation trajectory, or the work may be suspended, for example.
The present invention has been made in view of the foregoing, and provides a control system for a work machine capable of continuously executing excavation operation, without making the excavation incomplete or making the work suspended in automatic excavation control of the work machine.

Solution to Problem

To solve the above problems, the control system for the work machine of the present invention is a control system for a work machine that controls excavation operation of a work device in excavation work performed by the work machine provided with the work device. The control system includes a controller including: an excavation trajectory planning section that plans an excavation trajectory of the work device on the basis of a predetermined volume of an object to be excavated in planned excavation; and a plan execution section that controls operation of the work device to accomplish the excavation trajectory planned in the excavation trajectory planning section. The excavation trajectory planning section includes: an initial planning section that plans the excavation trajectory before operation of the work device; a re-planning necessity determination section that determines necessity of re-planning of the excavation trajectory on the basis of a change in a progress rate with respect to time of the operation of the work device based on the excavation trajectory planned in the initial planning section in order to continue the excavation operation of the work device during the operation of the work device based on the excavation trajectory planned in the initial planning section; and a re-planning section that re-plans the excavation trajectory for continuing the excavation operation of the work device during the operation of the work device based on the excavation trajectory planned in the initial planning section when the re-planning necessity determination section determines that re-planning is required.

Advantageous Effects of Invention

According to the present invention, even if excavation operation cannot be continued due to an unexpected factor during the excavation operation, it is possible to re-plan an excavation trajectory and continuously execute the excavation operation, without making the excavation incomplete or making the work suspended.
Other problems, configurations, and advantageous effects will become apparent from the following description of embodiments.

Brief Description of Drawings

Fig. 1 is a perspective view of a hydraulic excavator 1 incorporating a control system of the present invention.
Fig. 2 is a system diagram of the control system according to Embodiment 1 of the present invention.
Fig. 3 is a flowchart of a re-planning section 204 and a trajectory selection section 205 according to Embodiment 1 of the present invention.
Fig. 4 is a flowchart of a method for calculating a soil volume according to Embodiment 1 of the present invention.
Fig. 5 is a diagram explaining an excavated volume calculated in S404 of Fig. 4.
Fig. 6 is a flowchart of a re-planning necessity determination section 207 according to Embodiment 1 of the present invention.
Fig. 7 is a flowchart of a progress management section 208 according to Embodiment 1 of the present invention.
Fig. 8 is a system diagram of a control system according to Embodiment 2 of the present invention.
Fig. 9 is a flowchart of a maximum distance calculation section 701 according to Embodiment 2 of the present invention.
Fig. 10 is a diagram explaining a maximum distance.
Fig. 11 is a system diagram of a control system according to Embodiment 3 of the present invention.
Fig. 12 is a flowchart of a re-planning necessity determination section 902 according to Embodiment 3 of the present invention.
Fig. 13 is a system diagram of a control system according to Embodiment 4 of the present invention.
Fig. 14 is a display example of a display device according to Embodiment 4 of the present invention.

Description of Embodiments

Hereinafter, embodiments of the present invention will be described by referring to the accompanying drawings. In each drawing, the same reference numeral is given to a part having the same function and the repeated description may be omitted. In the following description, although a hydraulic excavator provided with a bucket 10 as a work implement (attachment) at the end of a work device will be described by way of example, the present invention may be applicable to a work machine provided with an attachment other than the bucket. Furthermore, the present invention is also applicable to a work machine other than the hydraulic excavator as long as the work machine includes an articulated work device with a plurality of link members (an attachment, an arm, a boom, and the like) connected to each other.

[Embodiment 1]

<Overall Configurations>

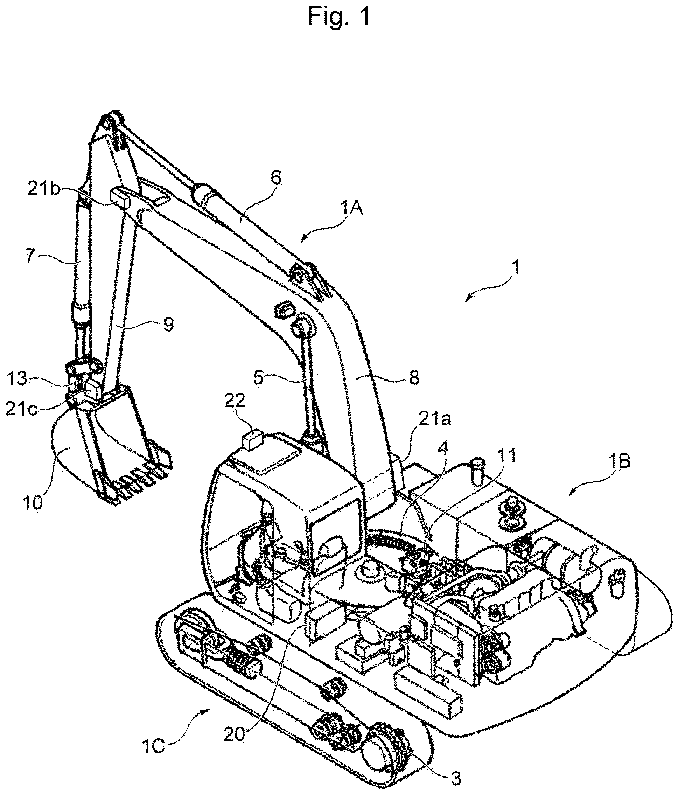

Fig. 1 is a perspective view of a hydraulic excavator 1 incorporating a control system of the present invention.
The hydraulic excavator (hereinafter simply referred to as the excavator) 1 includes a lower traveling body 1C, an upper swing body 1B rotatably attached to the lower traveling body 1C via a swing device 4, and a front 1A as a work device attached to the upper swing body 1B. The front 1A includes a boom 8 rotatably attached to the upper swing body 1B, an arm 9 rotatably attached to the boom 8, a bucket 10 rotatably attached to the arm 9, a bucket link 13 rotatably attached to the bucket 10 and the arm 9, a boom cylinder 5 that is coupled to the boom 8 and the upper swing body 1B and arbitrarily changes a rotation angle of the boom 8 relative to the upper swing body 1B, an arm cylinder 6 that is coupled to the boom 8 and the arm 9 and arbitrarily changes a rotation angle of the arm 9 relative to the boom 8, and a bucket cylinder 7 that is coupled to the arm 9 and the bucket link 13 and arbitrarily changes a rotation angle of the bucket 10 via the bucket link 13. The lower traveling body 1C is driven by a traveling motor 3 and allows a vehicle body to move to any given position. The swing device 4 includes a swing motor 11 that arbitrarily changes a rotation angle of the upper swing body 1B relative to the lower traveling body 1C. On the upper swing body 1B, a controller 20 incorporating the control system of the present invention is provided.
Note that the control system of the present invention may be implemented via wireless communication or the like as long as a trajectory (also referred to as a track) of excavation can be calculated. In other words, the control system of the present invention need not be mounted on the vehicle body. For example, the work machine (excavator 1) may be provided with a communication terminal, and the control system may be implemented on an external server or the like.
The excavator 1 includes a boom angle measuring device 21a that is provided on the boom 8 and measures a relative rotation angle between the upper swing body 1B and the boom 8, an arm angle measuring device 21b that is provided on the arm 9 and measures a relative rotation angle between the boom 8 and the arm 9, and a bucket angle measuring device 21c that is provided on the bucket 10 and measures a rotation angle of the bucket 10 relative to the arm 9.

**EP 4 682 314 A1**

It is noted that an angle/angular velocity measuring device is assumed to be an angle sensor and denoted as the angle measuring device. However, it may be any form of device that can measure and calculate a relative angle, and may calculate the relative angle by subtraction on the basis of an angle with respect to the ground, such as an IMU.

In addition, the excavator 1 includes a topography measuring device 22 that is provided on the upper swing body 1B so as to be able to measure a topography of an area excavated by the bucket 10.

Note that in consideration of a blind spot or the like due to the front 1A, the excavator 1 may include a plurality of topography measuring devices 22.

<Configuration of Controller 20>

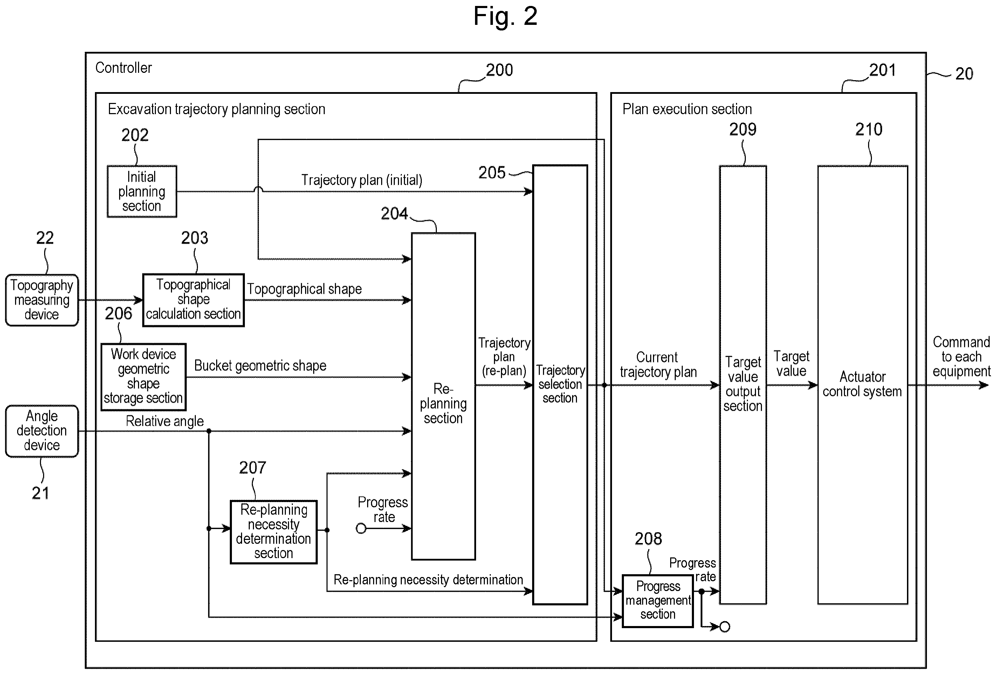

Fig. 2 is a system diagram of the control system installed on the controller 20 of the present embodiment.

It is noted that in the present embodiment, although the control system is installed on the controller 20 on the vehicle body, the control system may be mounted on the controller outside of the vehicle body to control via communication, as long as the configurations of the present embodiment can be implemented.

The controller 20 incorporating the control system of the present embodiment includes an excavation trajectory planning section 200 and a plan execution section 201 so as to calculate an excavation trajectory (also referred to as an excavation track) of the bucket 10 and control the excavation operation in the excavation work of the excavator 1.

The excavation trajectory planning section 200 is a block for planning an excavation trajectory of the bucket 10 (in other words, calculating an excavation trajectory plan) on the basis of a predetermined volume of an object to be excavated in planned excavation, for example, earth and sand, that is, so as to excavate the earth and sand in a predetermined volume by the bucket 10. The excavation trajectory planning section 200 includes an initial planning section 202, a topographical shape calculation section 203, a re-planning section 204, a trajectory selection section 205, a work device geometric shape storage section 206, and a re-planning necessity determination section 207.

The initial planning section 202 plans an excavation trajectory (trajectory plan (initial)) of the bucket 10 before starting the excavation operation (before starting the operation by the work device).

The topographical shape calculation section 203 calculates a topographical shape before starting work on the basis of a measurement result obtained by the topography measuring device 22.

The topography measuring device 22 may be any device that can measure the shape of the topography in the vicinity of the excavation trajectory of the bucket 10, for example, Lidar, a stereo camera, and the like.

In addition, if the object to be excavated is earth and sand, for example, a target to be calculated by the topographical shape calculation section (surrounding shape calculation section) 203 is the shape of the terrain in the vicinity of the excavation trajectory of the bucket 10 in an area where the earth and sand exists, and if the object to be excavated is a man-made object such as industrial waste, for example, a target to be calculated is the shape of the accumulation of the industrial waste in the vicinity of the movement trajectory of the bucket 10 in an area where the industrial waste accumulates.

The topographical shape calculation section 203 converts three-dimensional coordinate information output from the topography measuring device 22 and geometry obtained by the topography measuring device 22 into data on the topography in the vicinity of a predetermined excavation point on given coordinates on the excavator 1 (for example, the swing center of the upper swing body 1B is the coordinates of the origin). Note that the topographical data may be any data that represents a height (z) on a plane (xy), such as a heightmap or voxels. In addition, the topography in the vicinity of the excavation point encompasses, specifically, at least an operation area of the front 1A of the excavator 1.

The work device geometric shape storage section 206 records (stores) a geometric shape (geometric information) of the bucket 10.

The re-planning necessity determination section 207 determines necessity of re-planning of the excavation trajectory of the bucket 10 depending on whether or not the excavation can be continued on the basis of relative angles output from an angle detection device 21 (the boom angle measuring device 21a, the arm angle measuring device 21b, the bucket angle measuring device 21c). That is, the re-planning necessity determination section 207 of the present embodiment determines whether or not the excavation can be continued (whether or not the excavation operation is now stopped) by determining a stopped state of actuators (the boom cylinder 5, the arm cylinder 6, the bucket cylinder 7) that operate the bucket 10 on the basis of the relative angles output from the angle detection device 21 during the excavation operation (during the operation of the work device), and determines necessity of re-planning of the excavation trajectory of the bucket 10 to continue the excavation operation of the bucket 10 (described later). In other words, the re-planning necessity determination section 207 determines necessity of re-planning of the excavation trajectory for continuing the excavation operation of the bucket 10 during the excavation operation (during the operation of the work device).

If the re-planning necessity determination section 207 determines that re-planning is required, the re-planning section 204 re-plans an excavation trajectory (trajectory plan (re-plan)) for continuing the excavation operation of the bucket 10 during the excavation operation (during the operation of the work device) on the basis of a current excavation trajectory (current trajectory plan) (output from the trajectory selection section 205), a progress rate (output from a progress management section 208), the topographical shape output from the topographical shape calculation section 203, the geometric shape of the bucket 10 output from the work device geometric shape storage section 206, the relative angles output from the angle detection device 21, and the re-planning necessity determination result obtained by the re-planning necessity determination section 207. At this time, on the basis of the above information, the re-planning section 204 re-plans the excavation trajectory (trajectory plan (re-plan)) so as to excavate the object to be excavated, for example, earth and sand, in the same volume as the volume to be excavated in planned excavation in the excavation trajectory (trajectory plan (initial)) planned in the initial planning section 202.

The trajectory selection section 205 outputs the current trajectory plan as a target of the work machine on the basis of the trajectory plan (initial) output from the initial planning section 202, the trajectory plan (re-plan) output from the re-planning section 204, and the re-planning necessity determination result output from the re-planning necessity determination section 207.

The plan execution section 201 is a block for controlling operations of the actuators (the boom cylinder 5, the arm cylinder 6, the bucket cylinder 7) that operate the bucket 10 to accomplish the excavation track (current trajectory plan) planned in the above-described excavation trajectory planning section 200. The plan execution section 201 includes the progress management section 208, a target value output section 209, and an actuator control system 210.

The progress management section 208 outputs a progress rate of the trajectory plan on the basis of the current trajectory plan output from the trajectory selection section 205 and the relative angles output from the angle detection device 21.

The target value output section 209 outputs a current target angle on the basis of the current trajectory plan output from the trajectory selection section 205 and the progress rate output from the progress management section 208.

The actuator control system 210 outputs a command to each equipment such that the actuators (the boom cylinder 5, the arm cylinder 6, the bucket cylinder 7) perform appropriate operations on the basis of the target angle output from the target value output section 209.

Note that the initial planning section 202 and the re-planning section 204 may be used in common using the same trajectory generation algorithm. However, when they are used in common, a target soil volume in an initial plan need to be input.

In the present embodiment, the trajectory plan indicates a map of the progress rate (%) and the relative angles of the boom 8, the arm 9, and the bucket 10.

Note that the trajectory plan may be any form that can uniquely determine the relative angles of the boom 8, the arm 9, the bucket 10 and their chronological orders, for example, by expressing the progress rate in time, by combining a position and an angle such as the tip position of the bucket 10 and the absolute angle of the bucket 10, the bucket pin position and the bucket absolute angle, by constructing an expression for calculating a relative angle using the progress rate, and the like.

<Operation of Controller 20>

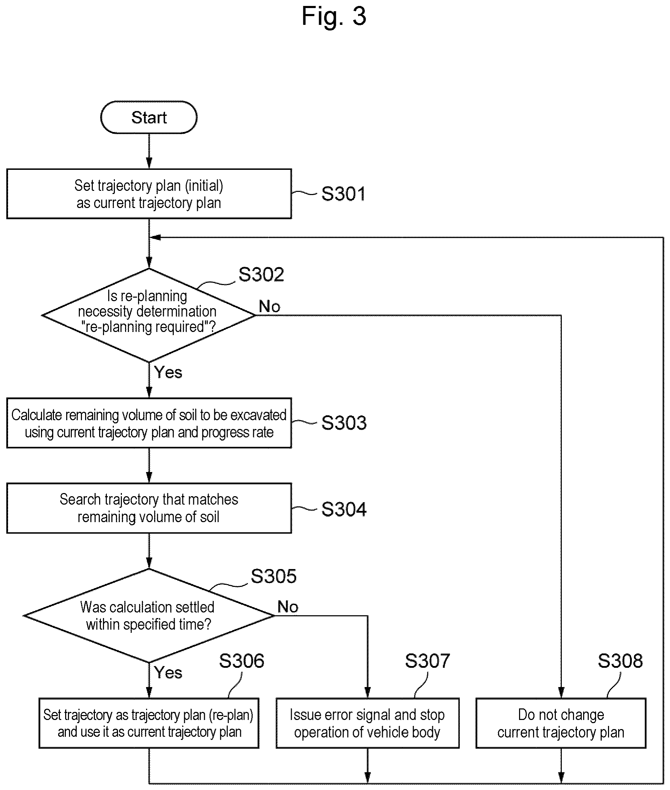

Fig. 3 is a flowchart of the re-planning section 204 and the trajectory selection section 205 of the controller 20 according to the present embodiment.

First, if the initial planning section 202 completes the trajectory plan (initial), the trajectory plan (initial) is set as a current trajectory plan (S301). While the current trajectory plan is accomplished by the target value output section 209 and the actuator control system 210, the re-planning necessity determination section 207 determines a re-planning necessity determination state through re-planning necessity determination (S302). If the determination result in S302 is that re-planning is not required, use of the current trajectory plan will be continued (S308). Meanwhile, if the determination result in S302 is that re-planning is required, a remaining volume of soil to be excavated using the current excavation trajectory (current trajectory plan) and the progress rate is calculated (S303). Note that to reduce computation time, the trajectory plan, the progress rate, and the volume of soil to be excavated may be recorded in memory or the like when the trajectory plan is created (for example, in the initial planning section 202 or in S304) and referenced.

After S303, a loop calculation or the like is performed to search a trajectory in which a start position matches current relative angles as well as the remaining volume of soil to be excavated (S304). It is determined whether the calculation (re-planning) in S304 is completed within a predetermined specified time (S305). If the calculation in S304 was not completed within the predetermined specified time, an error signal is issued, and the operation of the vehicle body is stopped (S307). Meanwhile, if the calculation was settled, the trajectory calculated in S304 is set as a trajectory plan (re-plan) and updated as the current trajectory plan (S306).

<<Example of S304>>

The trajectory generating method in S304 may be any method as long as the volume of soil to be excavated is matched, for example, a polynomial approximation method as given below. Note that since the polynomial approximation is a known track generating method for generating a tip track of a robot arm, detailed description thereof will be omitted.

[Math. 1]

$$\theta_{bm} = a_{bm}t^5 + b_{bm}t^4 + c_{bm}t^3 + d_{bm}t^2 + e_{bm}t^1 + f_{bm}t^0 \qquad \text{Formula 1}$$

$$\theta_{am} = a_{am}t^5 + b_{am}t^4 + c_{am}t^3 + d_{am}t^2 + e_{am}t^1 + f_{am}t^0 \qquad \text{Formula 2}$$

$$\theta_{bk} = a_{bk}t^5 + b_{bk}t^4 + c_{bk}t^3 + d_{bk}t^2 + e_{bk}t^1 + f_{bk}t^0 \qquad \text{Formula 3}$$

$\theta$: Relative angle
$t$: Progress rate (0 to 1)
$a$ to $e$: Optimization variable
$f$: Current relative angle of boom, arm, bucket
Subscript: bm=boom 8, am=arm 9, bk=bucket 10

In S304, an optimization variable ($a$ to $e$) that minimizes the following evaluation value J is searched. The search method may be any method as long as it is a so-called optimization method.

[Math. 2]

$$J = \sum_{i=now}^{i=1} \left| F(\theta_{bm}, \theta_{am}, \theta_{bk}, Map, t_i, Mec_{bk}) - V_{Dig} \right| \qquad \text{Formula 4}$$

$F$: Soil volume computation function
$V_{Dig}$: Remaining volume of soil to be excavated
$Map$: Topographical shape
$Mec$: Geometric information
$t_{now}$: Current progress rate (0 to 1)

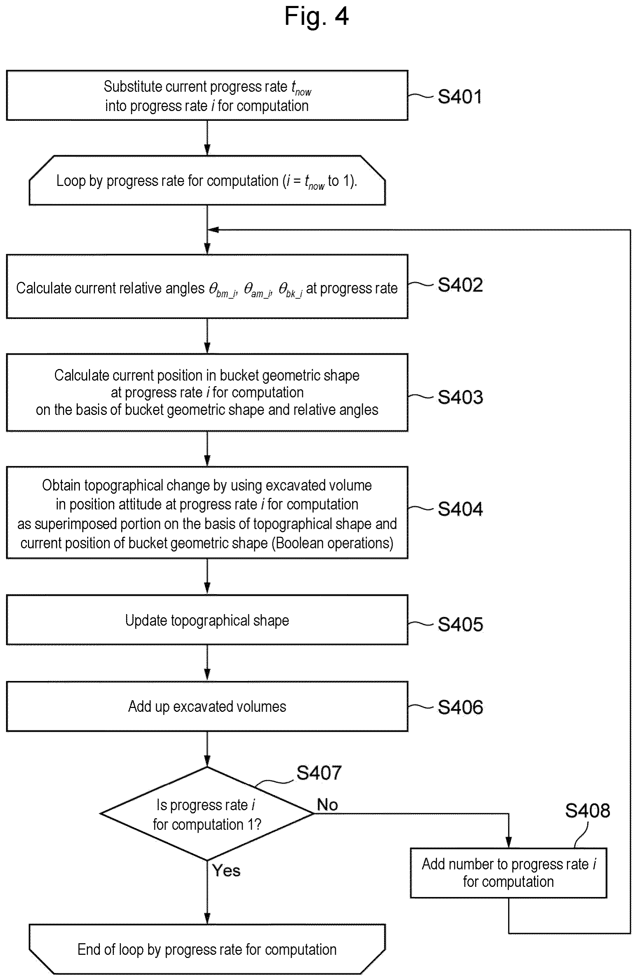

Fig. 4 is a flowchart of a method for calculating a soil volume related to S303 and S304 of Fig. 3. Note that the optimization variable is known.

First, a current progress rate $t_{now}$ is substituted into a progress rate i for computation (S401). To calculate a soil volume from the current progress rate $t_{now}$ to the end of excavation (progress rate = 1), a topographical change is calculated for each discretized progress rate and the calculated topographical changes are added up (a loop by the progress rate for computation). In the loop, first, the progress rate i for computation is substituted into Formulae 1 to 3, and the current relative angle $\theta_{bm\_i}$, $\theta_{am\_i}$, $\theta_{bk\_i}$ of each joint is calculated (S402).

On the basis of the relative angles obtained in S402 and a bucket geometric shape, a current position of the bucket geometric shape is calculated (S403).

Note that although the bucket geometric shape may be any data that appropriately simulates the actual bucket, and in the present embodiment, the bucket geometric shape is, for example, mesh data configured to cover the actual geometric shape of the bucket.

In addition, in S403, for example when a given point in the mesh data on the bucket is indicated by X, the point X' at the progress rate i for computation is given by the following Formula 5.

[Math. 3]

$$X' = T(\theta_{bm\_i})T(\theta_{bm\_i} + \theta_{am\_i})T(\theta_{bm\_i} + \theta_{am\_i} + \theta_{bk\_i})X \qquad \text{Formula 5}$$

Note that T in Formula 5 means a coordinate transformation matrix (coordinate transformation by forward kinematics), for example, a homogeneous transformation matrix or the like.

By performing similar computations on all points of a mesh, a current position of the bucket geometric shape in an arbitrary attitude can be calculated.

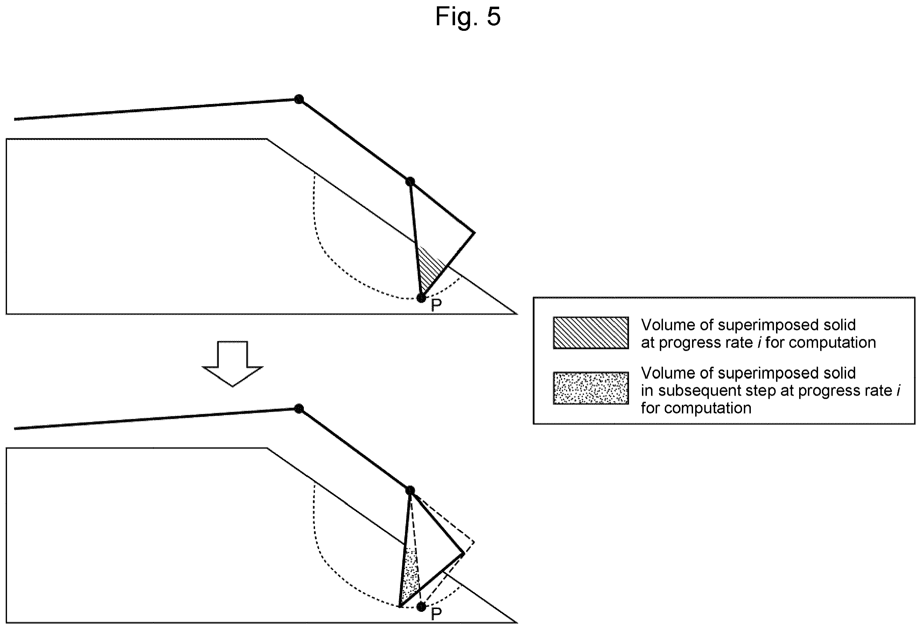

On the basis of the current position of the bucket geometric shape computed in S403 and the topographical shape, a new topographical shape is obtained by removing the volume of the superimposed solid from the topographical shape, using the excavated volume in the position attitude at the progress rate i for computation as the volume of the superimposed solid (S404). For example, Fig. 5 illustrates the volume of the superimposed solid at a given progress rate i for computation and the volume of the superimposed solid in a subsequent step at the progress rate i for computation. The specific calculation method in S404 is so-called Boolean operations. Any algorithm for the Boolean operations may be used.

The topographical shape calculated in S404 is updated (S405) and the excavated volumes are added up (S406). It is determined whether or not the progress rate i for computation is 1 (S407). If the progress rate i for computation is 1 or greater, the loop by the progress rate for computation ends. Meanwhile, if the progress rate i for computation is less than 1, the number is added to the progress rate i for computation (S408). When the addition operation is completed, again, the process goes back to the process of calculating the current relative angle $\theta_{bm\_i}$, $\theta_{am\_i}$, $\theta_{bk\_i}$ of each joint (S402). If the progress rate i for computation reaches 1 (when the final calculation ends), the computation ends, and the sum of the excavated volumes is obtained as the soil volume for a given track (a return value of F in Formula 4).

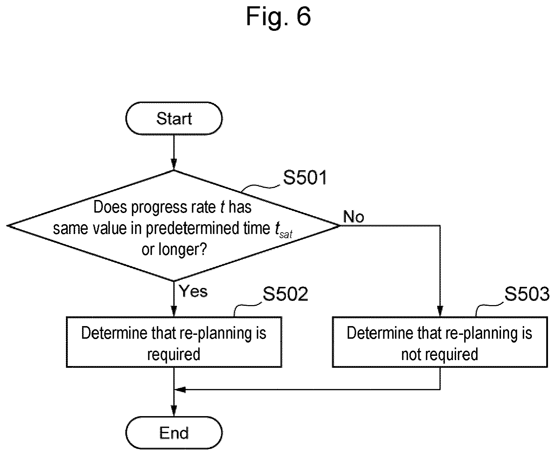

Fig. 6 is a flowchart of the re-planning necessity determination section 207 of the present embodiment.

The re-planning necessity determination section 207 performs re-planning necessity determination on the basis of a change in a progress rate t output from the progress management section 208 with respect to time. Specifically, the re-planning necessity determination section 207 determines whether the progress rate t has the same value in a predetermined time $t_{sat}$ or longer (S501). If the progress rate t has the same value in the predetermined time $t_{sat}$ or longer, the re-planning necessity determination section 207 determines that re-planning is required (S502), otherwise, the re-planning necessity determination section 207 determines that re-planning is not required (S503). The condition that the progress rate t has the same value in the predetermined time $t_{sat}$ or longer means that the actuators (the boom cylinder 5, the arm cylinder 6, the bucket cylinder 7) that operate the bucket 10 are in a stopped state during the excavation operation (during the operation of the work device).

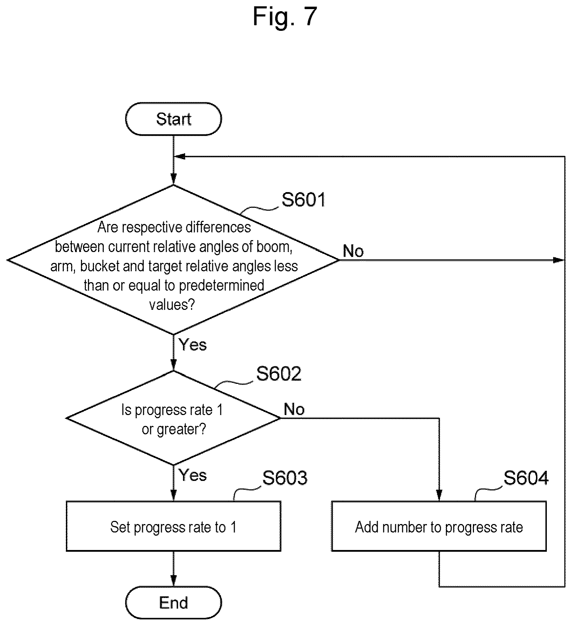

Fig. 7 is a flowchart of the progress management section 208 of the present embodiment.

First, the progress management section 208 derives target relative angles $\theta_{bm\_tar}$, $\theta_{am\_tar}$, $\theta_{bk\_tar}$ of the boom 8, the arm 9, the bucket 10, as targets, from the current trajectory plan output from the trajectory selection section 205 and the current progress rate $t_{now}$. The progress management section 208 determines whether the respective differences between the target relative angles and the current relative angles $\theta_{bm\_now}$, $\theta_{am\_now}$, $\theta_{bk\_now}$ of the boom 8, the arm 9, the bucket 10 detected by the angle detection device 21 are all less than or equal to predetermined values $\theta_{bm\_min}$, $\theta_{am\_min}$, $\theta_{bk\_min}$ (that is, whether or not all of the following Formulae 6 to 8 are satisfied) (S601). If the respective differences between the target relative angles and the current relative angles $\theta_{bm\_now}$, $\theta_{am\_now}$, $\theta_{bk\_now}$ of the boom 8, the arm 9, the bucket 10 are all less than or equal to the predetermined values $\theta_{bm\_min}$, $\theta_{am\_min}$, $\theta_{bk\_min}$ (that is, if all of the following Formulae 6 to 8 are satisfied), the process moves to S602. In S602, the progress management section 208 determines whether the progress rate is 1 or greater. If the progress rate is 1 or greater, the progress management section 208 fixes the progress rate to 1 (S603). Meanwhile, if the progress rate is less than 1, the progress management section 208 adds the number to the progress rate (S604), and the process goes back to Start. The number added in S604 is set in accordance with the increments of the progress rate in the current trajectory plan.

[Math. 4]

$$\left| \theta_{bm\_tar} - \theta_{bm\_now} \right| < \theta_{bm\_min} \qquad \text{Formula 6}$$
$$\left| \theta_{am\_tar} - \theta_{am\_now} \right| < \theta_{am\_min} \qquad \text{Formula 7}$$
$$\left| \theta_{bk\_tar} - \theta_{bk\_now} \right| < \theta_{bk\_min} \qquad \text{Formula 8}$$

Note that in the above Formulae 6 to 8, whether to add a number to the progress is determined using the predetermined values $\theta_{bm\_min}$, $\theta_{am\_min}$, $\theta_{bk\_min}$ (S601). However, if relative angles are uniquely determined, the relative angles may be specified indirectly, not directly. Specific examples may include the bucket tip position and the absolute angle of the bucket 10, the bucket pin position (the pin coupling the arm 9 and the bucket 10) and the absolute angle of the bucket 10, the absolute angle of each joint angle, and the like.

<Unique Advantageous Effect of Embodiment>

According to Embodiment 1, in the work machine that plans in advance and performs automatic excavation along the plan, even when it is difficult to continue excavation, it is possible to re-plan the excavation trajectory and continuously execute the excavation operation.

[Embodiment 2]

<Configuration of Controller 20>

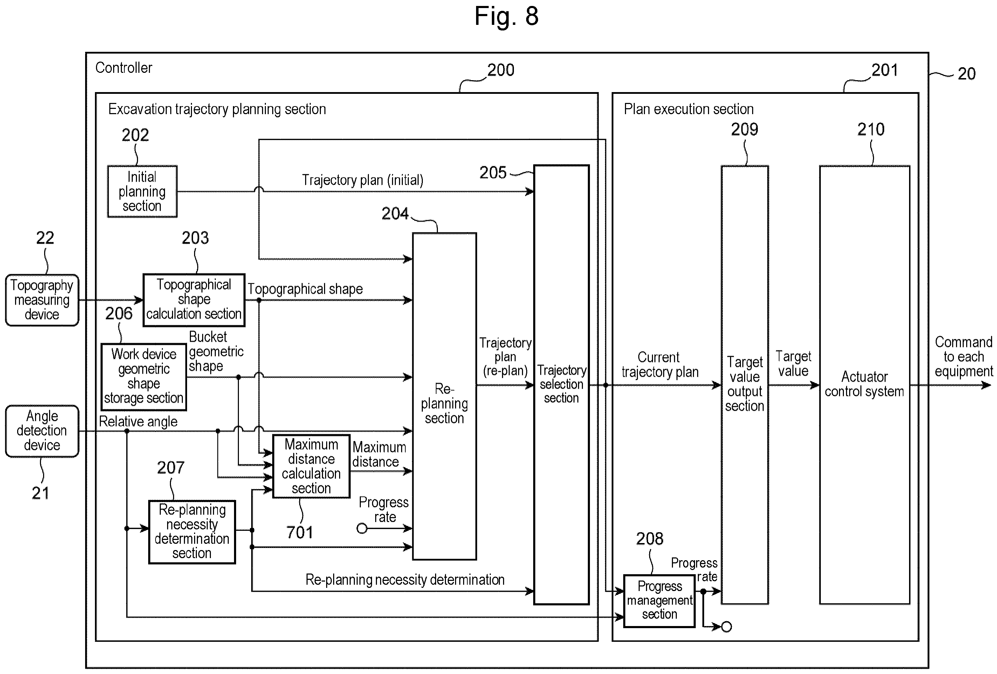

Fig. 8 is a system diagram of the control system installed on the controller 20 of Embodiment 2. In addition to the configuration of Embodiment 1, Embodiment 2 includes a maximum distance calculation section 701 in the excavation trajectory planning section 200 of the controller 20.

The maximum distance calculation section 701 calculates a maximum distance that is the largest distance from the ground surface (the surface of the object to be excavated) to an arbitrary point on the bucket 10 at a point in time when the re-planning necessity determination section 207 determines that re-planning is required, on the basis of the re-planning necessity determination result output from the re-planning necessity determination section 207, the topographical shape output from the topographical shape calculation section 203, the relative angles output from the angle detection device 21, and the geometric shape of the bucket 10 output from the work device geometric shape storage section 206, and then outputs the calculated maximum distance to the re-planning section 204.

<Operation of Controller 20>

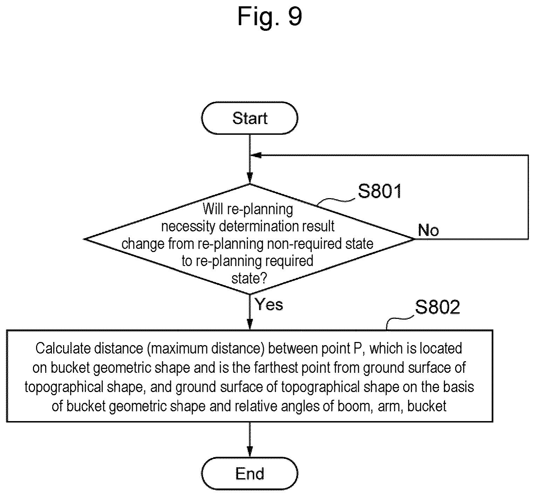

Fig. 9 is a flowchart of the maximum distance calculation section 701 of the present embodiment.

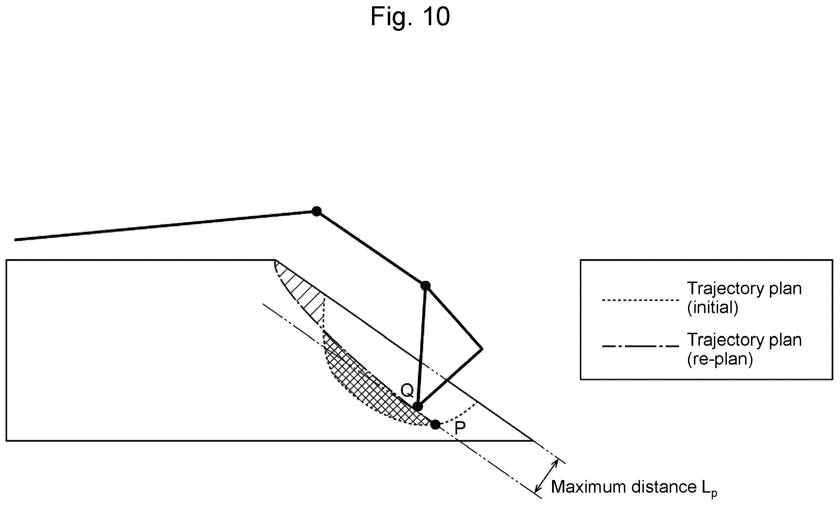

First, the maximum distance calculation section 701 determines whether the re-planning necessity determination in the re-planning necessity determination section 207 will change from the re-planning non-required state to the re-planning required state (S801). If the determination in S801 is that the re-planning non-required state will be changed to the re-planning required state, the maximum distance calculation section 701 obtains coordinates of an arbitrary point (point Q) on the bucket 10 on the basis of the bucket geometric shape and Formula 5, and calculates a distance $L_p$ (maximum distance) between the point P, which is the farthest point from the ground surface of the topographical shape, and the ground surface of the topographical shape (S802). In other words, the maximum distance calculation section 701 calculates, as the maximum distance, the distance $L_p$, that is, the largest distance from the ground surface (the surface of the object to be excavated) to the arbitrary point on the bucket 10 at a point in time when the re-planning necessity determination section 207 determines that re-planning is required. For example, Fig. 10 illustrates a relationship between the bucket tip (point Q) on the arbitrary point on the bucket 10 and the maximum distance $L_p$.

On the basis the maximum distance $L_p$ output from the maximum distance calculation section 701, the re-planning section 204 re-plans an excavation trajectory (trajectory plan (re-plan)) of the bucket 10 such that the depth from the topographical shape will not exceed the maximum distance $L_p$ (in other words, the distance from the ground surface (the surface of the object to be excavated) to the arbitrary point on the bucket 10 is less than or equal to the maximum distance $L_p$).

The re-planning method may be any method that considers restriction conditions using the above-described maximum distance. For example, the following Formula 9 or the like may be used in which a function to the maximum distance is added to the evaluation value J of Formula 4.

[Math. 5]

$$J = \sum_{i=now}^{i=1} \omega_1 \left| F(\theta_{bm}, \theta_{am}, \theta_{bk}, Map, t_i, Mec_{bk}) - V_{Dig} \right| \\ + \omega_2 |G(\theta_{bm}, \theta_{am}, \theta_{bk}, Map, t_i, Mec_{bk}) - L_P|$$

Formula 9

G: Maximum distance calculation function at arbitrary point of bucket (corresponding to S802)
$\omega$: Arbitrary weight

<Unique Advantageous Effect of Embodiment>

According to Embodiment 2, since the excavation trajectory is re-planned not to excavate deeper than the depth with the determination result that re-planning is required, it is possible to reduce the possibility of becoming the re-planning required state again and to smoothly continue the excavation operation.

[Embodiment 3]

Embodiment 3 provides a solution to the problem in Embodiment 1, where the re-planning requires time depending on the performance of the controller 20 and the re-planning calculation load, and thus the vehicle body need to be stopped until the re-planning calculation is completed despite the re-planning necessity determination that re-planning is required.

<Configuration of Controller 20>

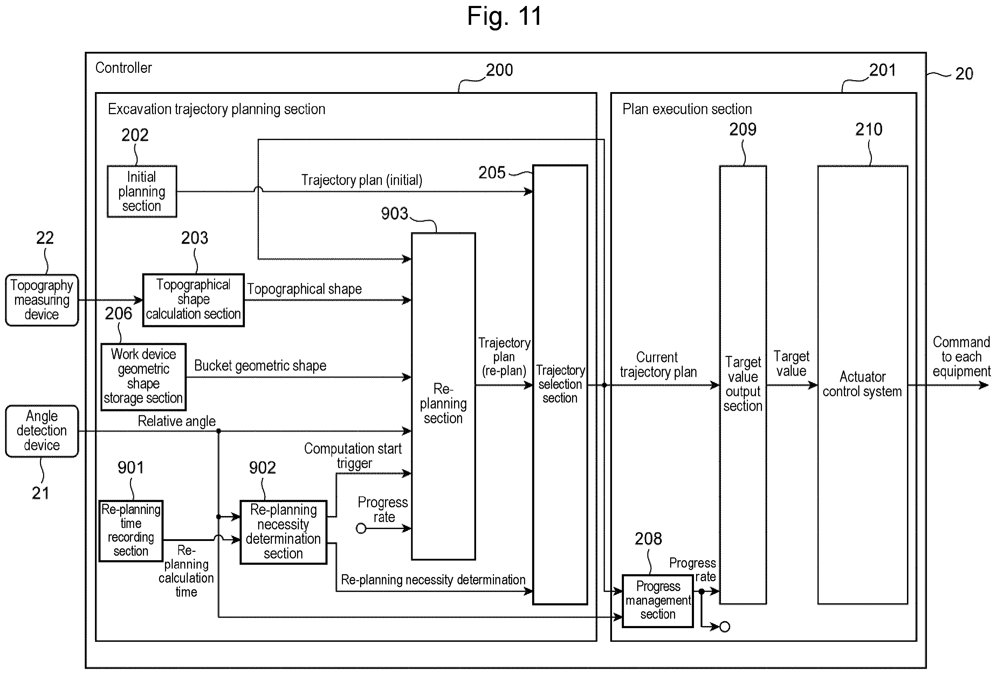

Fig. 11 is a system diagram of the control system installed on the controller 20 of Embodiment 3. In addition to the configuration of Embodiment 1, Embodiment 3 includes a re-planning time recording section 901 in the excavation trajectory planning section 200 of the controller 20. Embodiment 3 also includes a re-planning necessity determination section 902 instead of the re-planning necessity determination section 207, and a re-planning section 903 instead of the re-planning section 204.

The re-planning time recording section 901 records (stores) a time required for calculating re-planning (re-planning calculation time $t_{cal}$). The re-planning necessity determination section 902 instead of the re-planning necessity determination section 207 performs re-planning necessity determination on the basis of the re-planning calculation time $t_{cal}$ output from the re-planning time recording section 901, and outputs a computation start trigger. In addition, instead of the re-planning necessity determination of the re-planning section 204, the re-planning section 903 instead of the re-planning section 204 re-plans an excavation trajectory (trajectory plan (re-plan)) of the bucket 10 on the basis of the computation start trigger output from the re-planning necessity determination section 902.

Note that although the re-planning time recording section 901 sets in advance the re-planning calculation time $t_{cal}$, the re-planning time recording section 901 may calculate a system load, a communication load, or the like and they may be variable.

<Operation of Controller 20>

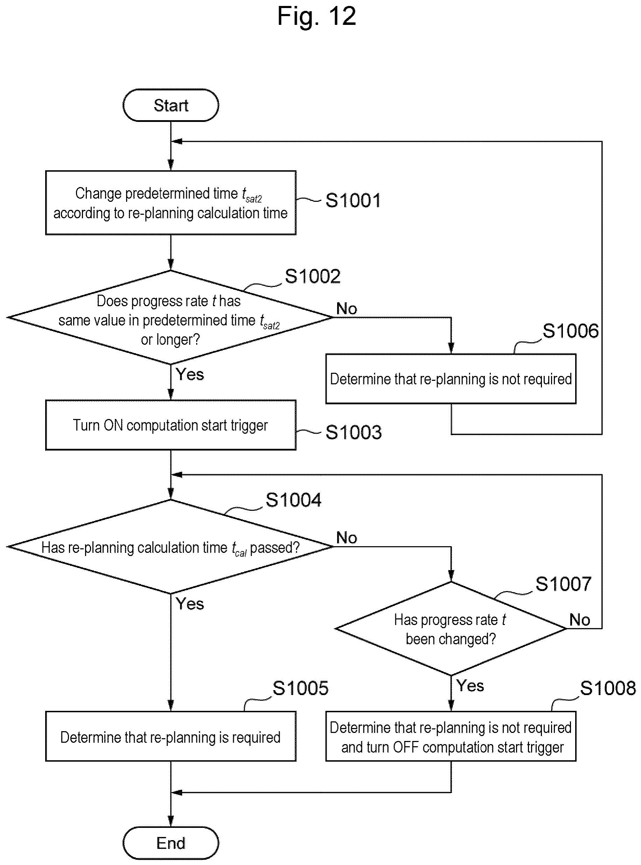

Fig. 12 is a flowchart of the re-planning necessity determination section 902 of the present embodiment.

First, the re-planning necessity determination section 902 changes a predetermined time $t_{sat2}$ for determining that re-planning is required according to the re-planning calculation time $t_{cal}$ (S1001).

The re-planning calculation time $t_{cal}$ and the predetermined time $t_{sat2}$ may be any form that satisfies the relationship in the following Formula 10, and for example, they may be given by the following Formula 11.

[Math. 6]

$$\frac{\partial t_{sat2}}{\partial t_{cal}} < 0 \qquad \text{Formula 10}$$

$$t_{sat2} = t_{sat} - t_{cal} \qquad \text{Formula 11}$$

$t_{sat}$: Arbitrary value set in re-planning necessity determination section 207

Next, the re-planning necessity determination section 902 determines whether or not the progress rate t has passed the predetermined time $t_{sat2}$ or longer (S1002). If the progress rate t has passed less than the predetermined time $t_{sat2}$ in S1002, the re-planning necessity determination section 902 determines that re-planning is not required (S1006). Meanwhile, if the progress rate t has passed the predetermined time $t_{sat2}$ or longer in S1002, the re-planning necessity determination section 902 turns ON the computation start trigger (S1003). The condition that the progress rate t has the same value in the predetermined time $t_{sat}$ or longer means that the actuators (the boom cylinder 5, the arm cylinder 6, the bucket cylinder 7) that operate the bucket 10 are in a stopped state during the excavation operation (during the operation of the work device). In response to the computation start trigger, the re-planning section 903 starts re-planning of the excavation trajectory (trajectory plan (re-plan)) of the bucket 10.

After the process in S1003, the re-planning necessity determination section 902 determines whether or not the re-planning calculation time $t_{cal}$ has passed (S1004). If it is determined that the re-planning calculation time $t_{cal}$ has not passed in S1004, the re-planning necessity determination section 902 determines whether or not the progress rate t has been changed (S1007). If it is determined that the progress rate t has been changed in S1007, that is, if the progress rate t has been changed during re-planning calculation (until the re-planning calculation time $t_{cal}$ passes after determining that re-planning is required), the re-planning necessity determination section 902 determines that re-planning is not required, and suspends re-planning by turning OFF the computation start trigger (S1007 to S1008). Meanwhile, if it is determined that the re-planning calculation time $t_{cal}$ has passed in S1004, the re-planning necessity determination section 902 determines that re-planning is required (S1005). If it is determined that re-planning is required, the trajectory selection section 205 selects, as a new trajectory plan, the excavation trajectory (trajectory plan (re-plan)) that was re-planned in the re-planning section 903.

<Unique Advantageous Effect of Embodiment>

According to Embodiment 3, the re-planning necessity determination section 902 performs re-planning necessity determination prediction according to the re-planning calculation time $t_{cal}$ in the re-planning section 903. This can reduce the stopped state of the work device due to the re-planning calculation when re-planning the excavation trajectory.

[Embodiment 4]

<Configuration of Controller 20>

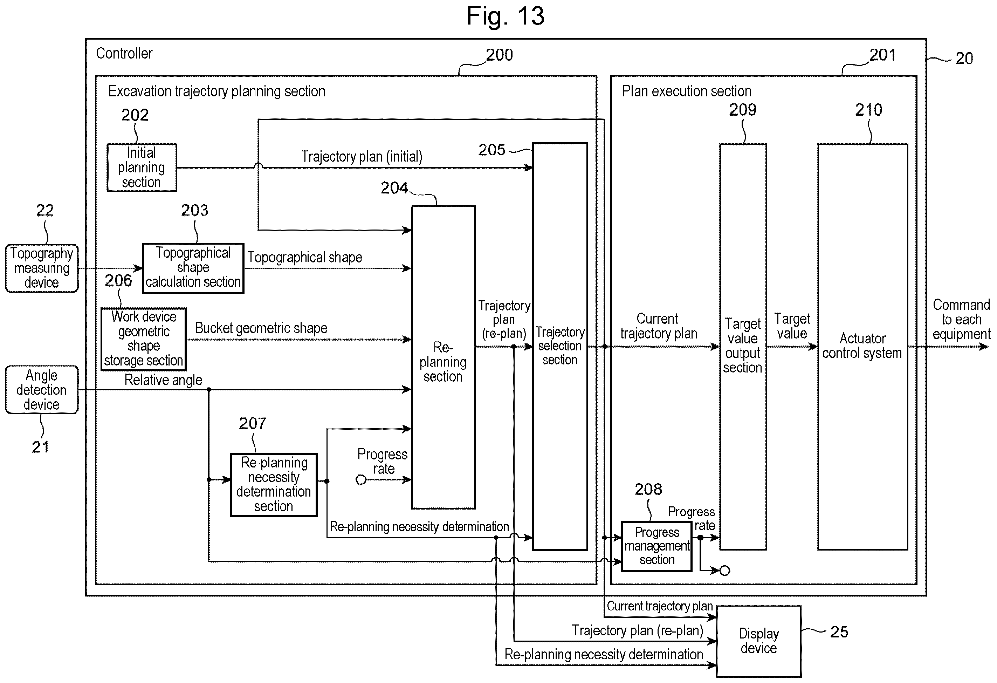

Fig. 13 is a system diagram of the control system installed on the controller 20 of Embodiment 4. In addition to the configuration of Embodiment 1, Embodiment 4 includes a display device (re-plan display section) 25 on the upper swing body 1B, for example. Note that the display device 25 may be disposed outside of the excavator 1 via wireless or the like.

<Operation>

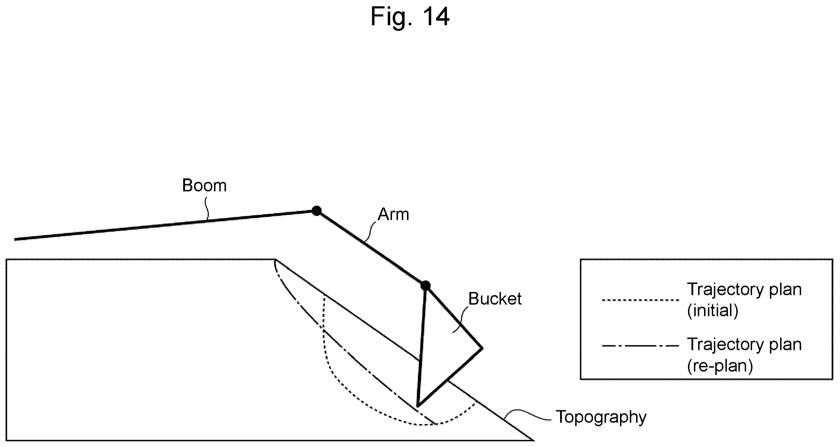

Fig. 14 is a display example that is displayed on the display device 25 of the present embodiment.

The display device 25 displays (outputs) at least a display image allowing understanding of a geometric relationship of the front 1A, a display image representing a trajectory in the trajectory plan (re-plan) re-planned in the re-planning section 204, a display image representing a trajectory in the current trajectory plan selected by the trajectory selection section 205, and the topographical shape calculated in the topographical shape calculation section 203. In addition, the display device 25 may display (output) a re-planning necessity determination result obtained by the re-planning necessity determination section 207.

Note that the display image representing the trajectory may be any form as long as the relative angle can be confirmed. Examples may include the bucket tip position and the bucket absolute angle, the bucket pin position and the bucket absolute angle, and the like.

<Unique Advantageous Effect of Embodiment>

According to Embodiment 4, the excavation trajectories before and after change (before and after re-planning) are explicitly shown, which allows an operator to confirm automatic excavation operation.

[Conclusion]

As described above, in the control system for the work device (the excavator 1) of the present embodiment, a control system for a work machine that controls excavation operation of a work device in (automatic) excavation work performed by the work machine provided with the work device (the front 1A) includes: the controller 20 including the excavation trajectory planning section 200 that plans an excavation trajectory of the work device on the basis of a predetermined volume of an object to be excavated (earth and sand) in planned excavation (so as to excavate an object to be excavated (earth and sand) in a predetermined volume by the work device), and the plan execution section 201 that controls operation of the work device (actuators that operate the work device) to accomplish the excavation trajectory planned in the excavation trajectory planning section 200, wherein the excavation trajectory planning section 200 includes the initial planning section 202 that plans the excavation trajectory before operation of the work device (before starting excavation operation), the re-planning necessity determination section 207 that determines necessity of re-planning of the excavation trajectory on the basis of a change in a progress rate with respect to time of the operation of the work device based on the excavation trajectory planned in the initial planning section 202 in order to continue the excavation operation of the work device during the operation of the work device (during the excavation operation) based on the excavation trajectory planned in the initial planning section 202, and the re-planning section 204 that re-plans the excavation trajectory for continuing the excavation operation of the work device during the operation of the work device (during the excavation operation) based on the excavation trajectory planned in the initial planning section 202 when the re-planning necessity determination section 207 determines that re-planning is required.

According to the present embodiment, even if excavation operation cannot be continued due to an unexpected factor during the excavation operation, it is possible to re-plan an excavation trajectory and continuously execute the excavation operation, without making the excavation incomplete or making the work suspended.

In addition, in the control system for the work device (the excavator 1) of the present embodiment, the controller 20 includes a surrounding shape calculation section (the topographical shape calculation section 203) that acquires a surrounding shape (topographical shape) of an object to be excavated around the excavation trajectory of the work device, and the work device geometric shape storage section 206 that stores a geometric shape of the work device, wherein the re-planning section 204 re-plans the excavation trajectory so as to excavate the object to be excavated (earth and sand) in a same volume as a volume to be excavated in planned excavation in the excavation trajectory planned in the initial planning section 202 on the basis of the surrounding shape (topographical shape) of the object to be excavated acquired in the surrounding shape calculation section (the topographical shape calculation section 203) and the geometric shape of the work device stored in the work device geometric shape storage section 206.

According to the present embodiment, in addition to the above-described advantageous effects, the excavation trajectory is re-planned such that the volume in the excavation trajectory before re-planning is identical to the volume in the excavation trajectory after re-planning, and thus the same amount of the object to be excavated (earth and sand) can be ensured in the work device even if the excavation trajectory is re-planned.

In addition, in the control system for the work device (the excavator 1) of the present embodiment, the re-planning necessity determination section 207 determines necessity of re-planning of the excavation trajectory (determines whether or not the excavation can be continued; determines a stop of the excavation operation) on the basis of a stopped state of an actuator that operates the work device at least during the operation of the work device of the work machine (during the excavation operation).

According to the present embodiment, it is possible to more accurately determine the condition that re-planning of the excavation trajectory is required.

In addition, in the control system for the work device (the excavator 1) of the present embodiment, the controller 20 includes a surrounding shape calculation section (the topographical shape calculation section 203) that acquires a surrounding shape (topographical shape) of an object to be excavated around the excavation trajectory of the work device, and the maximum distance calculation section 701 that calculates a maximum distance on the basis of the surrounding shape (topographical shape) of the object to be excavated acquired in the surrounding shape calculation section (the topographical shape calculation section 203) and geometric information on the work device at a point in time when the re-planning necessity determination section 207 determines that re-planning is required, the maximum distance being a largest distance from a surface of the object to be excavated (ground surface) to an arbitrary point on the work device, wherein the re-planning section 204 re-plans the excavation trajectory such that the distance from the surface of the object to be excavated (ground surface) to the arbitrary point on the work device is less than or equal to the maximum distance calculated in the maximum distance calculation section 701.

According to the present embodiment, since the excavation trajectory is re-planned such that the distance is less than or equal to the depth from the surface of the object to be excavated (ground surface) at a point in time when it is determined that re-planning of the excavation trajectory is required, it is possible to reduce the possibility that re-planning of the re-planned excavation trajectory is required again.

In addition, in the control system for the work device (the excavator 1) of the present embodiment, the re-planning necessity determination section 207 performs re-planning necessity determination prediction according to a re-planning calculation time in the re-planning section 204.

According to the present embodiment, instead of re-planning the excavation trajectory after it is determined that re-planning of the excavation trajectory is required, the excavation trajectory can be re-planned before it is determined that re-planning of the excavation trajectory is required. Accordingly, it is possible to re-plan the excavation trajectory without stopping the vehicle body in the re-planning required state for the time corresponding to the amount of time required for calculating the re-planning of the excavation trajectory.

In addition, in the control system for the work device (the excavator 1) of the present embodiment, the controller 20 includes the re-plan display section (the display device 25) that outputs (displays) the excavation trajectory after re-planning in the re-planning section 204 and the necessity of re-planning of the excavation trajectory determined in the re-planning necessity determination section 207.

According to the present embodiment, a plan after re-planning or the presence or absence of re-planning is output, and thus the presence or absence of re-planning or a plan after change can easily be confirmed from the outside.

Note that the present invention is not limited to the aforementioned embodiments, and includes a variety of variations. For example, although the aforementioned embodiments have been described in detail to clearly illustrate the present invention, the present invention need not include all of the configurations described in the embodiments. It is possible to replace a part of a configuration of an embodiment with a configuration of another embodiment. In addition, it is also possible to add, to a configuration of an embodiment, a configuration of another embodiment. Further, it is also possible to, for a part of a configuration of each embodiment, add, remove, or substitute a configuration of another embodiment.

In addition, some or all of the functions of the controller of the aforementioned embodiments may be implemented by hardware by designing them into an integrated circuit, for example. Each of the functions may be implemented by software using a processor interpreting and executing a program that implements each function. Information such as the program that implements each function, tables, and files can be stored in a storage device in the controller, a recording device such as a hard disk or a SSD (Solid State Drive), or a recording medium such as an IC card, an SD card, or a DVD.

Reference Signs List

1       Hydraulic excavator
1A     Front

| 1B | Upper swing body |
|---|---|
| 1C | Lower traveling body |
| 3 | Traveling motor |
| 4 | Swing device |
| 5 | Boom cylinder |
| 6 | Arm cylinder |
| 7 | Bucket cylinder |
| 8 | Boom |
| 9 | Arm |
| 10 | Bucket |
| 11 | Swing motor |
| 13 | Bucket link |
| 20 | Controller |
| 21 | Angle detection device |
| 22 | Topography measuring device |
| 25 | Display device (re-plan display section) (Embodiment 4) |
| 200 | Excavation trajectory planning section |
| 201 | Plan execution section |
| 202 | Initial planning section |
| 203 | Topographical shape calculation section (surrounding shape calculation section) |
| 204 | Re-planning section |
| 205 | Trajectory selection section |
| 206 | Work device geometric shape storage section |
| 207 | Re-planning necessity determination section |
| 208 | Progress management section |
| 209 | Target value output section |
| 210 | Actuator control system |
| 701 | Maximum distance calculation section (Embodiment 2) |
| 901 | Re-planning time recording section (Embodiment 3) |
| 902 | Re-planning necessity determination section (Embodiment 3) |
| 903 | Re-planning section (Embodiment 3) |

**Claims**

1. A control system for a work machine that controls excavation operation of a work device in excavation work performed by the work machine provided with the work device, the control system comprising a controller including:

an excavation trajectory planning section that plans an excavation trajectory of the work device on the basis of a predetermined volume of an object to be excavated in planned excavation; and
a plan execution section that controls operation of the work device to accomplish the excavation trajectory planned in the excavation trajectory planning section,
wherein the excavation trajectory planning section includes:

an initial planning section that plans the excavation trajectory before operation of the work device;
a re-planning necessity determination section that determines necessity of re-planning of the excavation trajectory on the basis of a change in a progress rate with respect to time of the operation of the work device based on the excavation trajectory planned in the initial planning section in order to continue the excavation operation of the work device during the operation of the work device based on the excavation trajectory planned in the initial planning section; and
a re-planning section that re-plans the excavation trajectory for continuing the excavation operation of the work device during the operation of the work device based on the excavation trajectory planned in the initial planning section when the re-planning necessity determination section determines that re-planning is required.

2. The control system for the work machine according to claim 1, wherein the controller includes:

a surrounding shape calculation section that acquires a surrounding shape of an object to be excavated around the excavation trajectory of the work device; and

a work device geometric shape storage section that stores a geometric shape of the work device,
wherein the re-planning section re-plans the excavation trajectory so as to excavate the object to be excavated in a same volume as a volume to be excavated in planned excavation in the excavation trajectory planned in the initial planning section on the basis of the surrounding shape of the object to be excavated acquired in the surrounding shape calculation section and the geometric shape of the work device stored in the work device geometric shape storage section.

3. The control system for the work machine according to claim 1, wherein
the re-planning necessity determination section determines necessity of re-planning of the excavation trajectory on the basis of a stopped state of an actuator that operates the work device at least during the operation of the work device of the work machine.

4. The control system for the work machine according to claim 1,
wherein the controller includes:

a surrounding shape calculation section that acquires a surrounding shape of an object to be excavated around the excavation trajectory of the work device; and
a maximum distance calculation section that calculates a maximum distance on the basis of the surrounding shape of the object to be excavated acquired in the surrounding shape calculation section and geometric information on the work device at a point in time when the re-planning necessity determination section determines that re-planning is required, the maximum distance being a largest distance from a surface of the object to be excavated to an arbitrary point on the work device, and
wherein the re-planning section re-plans the excavation trajectory such that the distance from the surface of the object to be excavated to the arbitrary point on the work device is less than or equal to the maximum distance calculated in the maximum distance calculation section.

5. The control system for the work machine according to claim 1, wherein the re-planning necessity determination section performs re-planning necessity determination prediction according to a re-planning calculation time in the re-planning section.

6. The control system for the work machine according to claim 1, wherein the controller includes a re-plan display section that outputs the excavation trajectory after re-planning in the re-planning section and the necessity of re-planning of the excavation trajectory determined in the re-planning necessity determination section.

7. The control system for the work machine according to claim 1, wherein when the re-planning section re-plans the excavation trajectory, if re-planning was not completed within a predetermined time, an error signal is issued.

8. The control system for the work machine according to claim 1, wherein when the re-planning section re-plans the excavation trajectory, if re-planning was not completed within a predetermined time, the operation of the work machine is stopped.

## Fig. 1

# Fig. 2

# Fig. 3

```
            ( Start )
                |
                v
  +--------------------------------+
  | Set trajectory plan (initial)  |  ~ S301
  | as current trajectory plan     |
  +--------------------------------+
                |
                v                          S302
           /\
          /  \ Is re-planning
         <    necessity determination  >  No
          \  "re-planning required"?  /  ------------------+
           \/                                              |
            | Yes                                          |
            v                                              |
  +-------------------------------------------+            |
  | Calculate remaining volume of soil to be  | ~ S303     |
  | excavated using current trajectory plan   |            |
  | and progress rate                         |            |
  +-------------------------------------------+            |
            |                                              |
            v                                              |
  +-------------------------------+                        |
  | Search trajectory that matches| ~ S304                 |
  | remaining volume of soil      |                        |
  +-------------------------------+                        |
            |                                              |
            v                          S305                |
           /\                                              |
          /  \ Was calculation settled    No               |
         <     within specified time?   > -----+           |
          \  /                                 |           |
           \/                                  |           |
   S306      | Yes              S307           |    S308    |
            v                                  v           v
  +---------------------------+  +-----------------------+  +---------------------+
  | Set trajectory as         |  | Issue error signal    |  | Do not change       |
  | trajectory plan (re-plan) |  | and stop operation    |  | current trajectory  |
  | and use it as current     |  | of vehicle body       |  | plan                |
  | trajectory plan           |  +-----------------------+  +---------------------+
  +---------------------------+           |                         |
            |                             |                         |
            +-----------------------------+-------------------------+
```

# Fig. 4

Substitute current progress rate $t_{now}$ into progress rate $i$ for computation — S401

Loop by progress rate for computation ($i = t_{now}$ to 1).

Calculate current relative angles $\theta_{bm\_i}$, $\theta_{am\_i}$, $\theta_{bk\_i}$ at progress rate — S402

Calculate current position in bucket geometric shape at progress rate $i$ for computation on the basis of bucket geometric shape and relative angles — S403

Obtain topographical change by using excavated volume in position attitude at progress rate $i$ for computation as superimposed portion on the basis of topographical shape and current position of bucket geometric shape (Boolean operations) — S404

Update topographical shape — S405

Add up excavated volumes — S406

S407
Is progress rate $i$ for computation 1? — No — S408

Yes

Add number to progress rate $i$ for computation

End of loop by progress rate for computation

Fig. 5

Volume of superimposed solid
at progress rate *i* for computation

Volume of superimposed solid
in subsequent step at progress rate *i*
for computation

# Fig. 6

Start

S501

Does progress rate $t$ has same value in predetermined time $t_{sal}$ or longer?

No

Yes

S502

Determine that re-planning is required

S503

Determine that re-planning is not required

End

# Fig. 7

```
                    ┌──────────┐
                    │  Start   │
                    └──────────┘
                         │
                         ▼
                        ╱╲        S601
                       ╱  ╲
                      ╱    ╲
           Are respective differences
         between current relative angles of boom,      No
         arm, bucket and target relative angles less ──────────▶
            than or equal to predetermined
                     values?
                         │
                        Yes
                         │
                         ▼
                        ╱╲       S602
                       ╱  ╲
              Is progress rate 1        No
                or greater?    ──────────────┐
                         │                    │
                        Yes   S603            │    S604
                         │                    │
                         ▼                    ▼
           ┌─────────────────────┐  ┌──────────────────────────┐
           │ Set progress rate to 1│  │ Add number to progress rate │
           └─────────────────────┘  └──────────────────────────┘
                         │
                         ▼
                    ┌──────────┐
                    │   End    │
                    └──────────┘
```

Fig. 8

# Fig. 9

```
                    ┌──────────────┐
                    │    Start     │
                    └──────┬───────┘
                           │        ◄───────────────────────┐
                           ▼                                 │
                        S801                                 │
              ╱─────────────────────────╲                   │
            ╱    Will re-planning          ╲      No         │
          ╱    necessity determination result ╲ ─────────────┘
        ╱   change from re-planning non-required state ╲
          ╲        to re-planning required           ╱
            ╲             state?                    ╱
              ╲─────────────────────────────────╱
                           │ Yes       S802
                           ▼
┌──────────────────────────────────────────────────────────────┐
│  Calculate distance (maximum distance) between point P, which  │
│  is located on bucket geometric shape and is the farthest point│
│  from ground surface of topographical shape, and ground surface│
│  of topographical shape on the basis of bucket geometric shape │
│  and relative angles of boom, arm, bucket                      │
└──────────────────────────────────────────────────────────────┘
                           │
                           ▼
                    ┌──────────────┐
                    │     End      │
                    └──────────────┘
```

22

# Fig. 10

Trajectory plan
(initial)

Trajectory plan
(re-plan)

Maximum distance $L_p$

## Fig. 11

EP 4 682 314 A1

# Fig. 12

```
                            ┌─────────┐
                            │  Start  │
                            └────┬────┘
                                 │                                            ┌──────────────────────────────────┐
                                 ▼                                            │                                  │
            ┌──────────────────────────────────┐                             │                                  │
            │ Change predetermined time t_sat2  │ ～ S1001                    │                                  │
            │ according to re-planning calculation time │                    │                                  │
            └──────────────────┬───────────────┘                             │                                  │
                               │                                             │                                  │
                               ▼          S1002                              │                                  │
                        ╱─────────────────╲                                  │                                  │
                       ╱ Does progress rate t has ╲       No       S1006     │                                  │
                      ╱ same value in predetermined time t_sat2 ╲──────┐     │                                  │
                       ╲        or longer?        ╱               ┌────▼──────────────────────────────┐         │
                        ╲─────────────────╱                      │ Determine that re-planning is not required │──┘
                               │ Yes                             └───────────────────────────────────┘
                               ▼
            ┌──────────────────────────────────┐
            │  Turn ON computation start trigger │ ～ S1003
            └──────────────────┬───────────────┘                             ┌──────────────────────────────────┐
                               │                                             │                                  │
                               ▼          S1004                              │                                  │
                        ╱─────────────────╲                                  │                                  │
                       ╱ Has re-planning calculation ╲     No                │                                  │
                      ╱    time t_cal passed?     ╲──────────┐               │                                  │
                       ╲─────────────────╱              ▼   S1007            │                                  │
                               │ Yes              ╱─────────────╲            │                                  │
                               │                 ╱ Has progress rate t ╲  No │                                  │
                               │                ╱  been changed?    ╲───────┘                                  │
                               │                 ╲─────────────╱                                               │
                               │   S1005               │ Yes         S1008                                     │
                               ▼                       ▼                                                        │
            ┌──────────────────────────────────┐  ┌──────────────────────────────────┐                        │
            │ Determine that re-planning is required │ │ Determine that re-planning is not required │          │
            └──────────────────┬───────────────┘  │ and turn OFF computation start trigger │─────────────────┘
                               │                   └──────────────────────────────────┘
                               ▼
                          ┌─────────┐
                          │   End   │
                          └─────────┘
```

## Fig. 13

Controller

200 — Excavation trajectory planning section

201 — Plan execution section

20

202 — Initial planning section

Trajectory plan (initial)

205

204 — Re-planning section

22 — Topography measuring device

203 — Topographical shape calculation section

Topographical shape

206 — Work device geometric shape storage section

Bucket geometric shape

Angle detection device

21

Relative angle

207 — Re-planning necessity determination section

Progress rate

Trajectory plan (re-plan)

Trajectory selection section

Re-planning necessity determination

Current trajectory plan

209 — Target value output section

Target value

210 — Actuator control system

Command to each equipment

208 — Progress management section

Progress rate

Current trajectory plan

Trajectory plan (re-plan)

Re-planning necessity determination

Display device — 25

EP 4 682 314 A1

Fig. 14

Boom

Arm

Bucket

Topography

Trajectory plan
(initial)

Trajectory plan
(re-plan)

**EP 4 682 314 A1**

## INTERNATIONAL SEARCH REPORT

International application No.

**PCT/JP2024/001554**

### A. CLASSIFICATION OF SUBJECT MATTER

*E02F 3/43*(2006.01)i; *E02F 9/20*(2006.01)i
FI: E02F3/43 C; E02F9/20 M

According to International Patent Classification (IPC) or to both national classification and IPC

### B. FIELDS SEARCHED

Minimum documentation searched (classification system followed by classification symbols)

E02F9/20-E02F9/22, E02F3/42-E02F3/43, E02F3/84-E02F3/85

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 63-194032 A (KOMATSU LTD.) 11 August 1988 (1988-08-11) p. 3, left column, line 8 to p. 9, upper right column, line 19, fig. 1-13 | 1, 3, 5-8 |
| Y | p. 3, left column, line 8 to p. 9, upper right column, line 19, fig. 1-13 | 2, 4 |
| X | JP 2016-160718 A (HITACHI, LTD.) 05 September 2016 (2016-09-05) paragraphs [0014]-[0076], fig. 1-13 | 1-8 |
| Y | paragraphs [0014]-[0076], fig. 1-13 | 2, 4 |
| A | JP 2021-156078 A (SUMITOMO HEAVY INDUSTRIES, LTD.) 07 October 2021 (2021-10-07) | 1-8 |
| A | WO 2019/049248 A1 (HITACHI CONSTRUCTION MACHINERY CO., LTD.) 14 March 2019 (2019-03-14) | 1-8 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/001554**

| Patent document cited in search report | Publication date (day/month/year) | Patent family member(s) | Publication date (day/month/year) |
|---|---|---|---|
| JP 63-194032 A | 11 August 1988 | (Family: none) | |
| JP 2016-160718 A | 05 September 2016 | US 2016/0258128 A1<br>paragraphs [0025]-[0089], fig. 1-13 | |
| JP 2021-156078 A | 07 October 2021 | (Family: none) | |
| WO 2019/049248 A1 | 14 March 2019 | US 2020/0217050 A1<br>EP 3680395 A1<br>CN 109757113 A | |

Form PCT/ISA/210 (patent family annex) (July 2022)

**REFERENCES CITED IN THE DESCRIPTION**

**Patent documents cited in the description**

- JP 7088792 B